# EUROPEAN PATENT APPLICATION

(11) **EP 3 907 598 A1**
(43) Date of publication of application: **10.11.2021**
(21) Application number: 20900915.8
(22) Date of filing: 18.03.2020
(51) Int. Cl.: G06F 3/14, G06F 3/0484

(54) **APPARATUS FOR ENLARGING AND DISPLAYING SCREEN AND RELAYING SAME IN REAL TIME, AND OPERATION METHOD THEREFOR**

(30) Priority: 19.12.2019 KR 20190171280; 04.03.2020 KR 20200027387
(71) Applicant: Overflow Biz, Inc., Seongdong-gu Seoul 04793 (KR)
(72) Inventor: KIM, Tae Hoong, Seongbuk-gu, Seoul 02835 (KR)
(74) Representative: RGTH
(86) International application number: PCT/KR2020/003727
(87) International publication number: WO 2021/125449

(57) **Abstract**

The present disclosure relates to an apparatus and a method for enlarging and displaying a screen using a portable electronic device and relaying the enlarged screen to a user in real time. The apparatus for enlarging and displaying the screen and relaying the enlarged screen in real time and the operation method thereof include a reception unit that receives the entire screen of a provider from a relay server, a display unit that displays the received entire screen, a recognition unit that detects a user input on the displayed entire screen, and a controller that detects a change in input state of the user input and zooms in on a region corresponding to the user input, on the entire screen based on the change in input state. According to an embodiment of the present disclosure, the present disclosure has an effect capable of simultaneously receiving screen enlargement and a real-time relay service at the same time by means of only a simple operation using the portable electronic device. Furthermore, the present disclosure has an effect capable of simply providing a screen enlargement real-time relay service for blind people with low vision.

## Description

### [TECHNICAL FIELD]

The present disclosure relates to a method for enlarging and displaying a screen using a portable electronic device and relaying the enlarged screen to a user in real time.

### [BACKGROUND ART]

The present disclosure relates to a method for partially enlarging a screen on a portable mobile terminal and a wearable device (glasses or the like), and particularly relates to a function of enlarging a portion of the screen to see a portion of the small screen in detail, when receiving a real-time relay service in the portable mobile terminal.

When providing a relay service including graph information rather than simple text information on a screen of the portable mobile terminal, there is a limitation that a user accurately recognizes graphics due to a limit to a liquid crystal size.

Furthermore, when the user directly enlarges the screen using a zoom function of the portable mobile terminal, there is an inconvenience in which the user should move the portable mobile terminal itself.

### [DETAILED DESCRIPTION OF THE INVENTION]

### [TECHINICAL PROBLEM]

The present disclosure proposes a method and an apparatus for enlarging and displaying a screen by means of a user smartphone, a tablet PC, a wearable device (glasses or the like), or the like and relaying the enlarged screen to a user in real time, in an environment, such as a university, an academy, an event hall, or a conference hall, which provides the user with a big screen in real time.

### [TECHNICAL SOLUTION]

According to an aspect of the present disclosure, an apparatus for enlarging and displaying a screen and relaying the enlarged screen in real time may include a reception unit that receives the entire screen of a provider from a relay server, a display unit that displays the received entire screen, a recognition unit that detects a user input on the displayed entire screen, and a controller that detects a change in input state of the user input and zoom in on a region corresponding to the user input, on the entire screen based on the change in input state. The controller may zoom in on the region corresponding to the user input at a first magnification corresponding to a first time, when the recognition unit detects the user input during the first time, may zoom in on the region corresponding to the user input at a second magnification corresponding to a second time, when the recognition unit detects the user input during the second time, and may return to an initial screen, when the recognition unit detects the user input below a predetermined time.

In an embodiment, the controller may zoom in and provide a recognition region corresponding to a provider input at a predetermined magnification to a user, based on the provider input which is input to the entire screen of the provider.

In an embodiment, the provider input may be at least one of a touch input, a mouse input, and a laser pointer input of the provider. The user input may be an input including at least one of a touch input and a mouse input of the user.

In an embodiment, the controller may be configured to sequentially change a screen enlargement magnification to correspond to an input time of the user input and display the region corresponding to the user input at a magnification to which the screen magnification changes, when a user releases the user input. The second time may be longer than the first time and the second magnification may be a magnification which is more zoomed out than the first magnification.

In an embodiment, the controller may include a storage unit that stores image data of a region zoomed in and navigated by the user and a machine learning unit that learns an interest of the user, the interest being stored in the storage unit. The machine learning unit may learn a screen enlargement pattern of the user, may track a touch input or a mouse input of the user, and may automatically zoom in and display a region of interest of the user on the entire screen of the user.

In an embodiment, the electronic device may be any one of a smartphone, a tablet PC, a wearable device, and a computer.

In an embodiment, a method for accessing an application program implemented in the electronic device may be at least one of sharing a personal identification number (PIN) code, a quick response (QR) code, a uniform resource locator (URL), any numeric code, and a WIFI password.

According to another aspect of the present disclosure, a system including a relay server and an electronic device may include the relay server that includes at least one of a session traversal utilities for NAT (STUN) server and a traversal using relays around NAT (TURN) server and the electronic device that includes a reception unit that receives the entire screen of a provider from the relay server, a display unit that displays the received entire screen, a recognition unit that detects a user input on the displayed entire screen, and a controller that detects a change in input state of the user input and zooms in on a region corresponding to the user input, on the entire screen based on the change in input state. The controller may zoom in on the region corresponding to the user input at a first magnification corresponding to a first time, when the recognition unit detects the user input during the first time, may zoom in on the region corresponding to the user input at a second magnification corresponding to a second time, when the recognition unit detects the user input during the second time, and may return to an initial screen, when the recognition unit detects the user input below a predetermined time.

According to another aspect of the present disclosure, an operation method of an apparatus for enlarging and displaying a screen and relaying the enlarged screen in real time may include receiving the entire screen of a provider from a relay server, displaying the received entire screen, detecting a user input on the displayed entire screen, detecting a change in input state based on the user input, and controlling to zoom in on a region corresponding to the user input, on the entire screen based on the change in input state. The controlling to zoom in on the region may include zooming in on the region corresponding to the user input at a first magnification corresponding to a first time, when detecting the user input during the first time, in the detecting of the user input, zooming in on the region corresponding to the user input at a second magnification corresponding to a second time, when detecting the user input during the second time, in the detecting of the user input, and returning to an initial screen, when detecting the user input below a predetermined time, in the detecting of the user input.

In an embodiment, the displaying may include tracking a provider input to the screen of the provider and zooming in and displaying a region recognized on the screen of the provider at a specific magnification to a user.

In an embodiment, the controlling to zoom in on the region may include sequentially changing a screen enlargement magnification to correspond to an input time of the user input and displaying the region corresponding to the user input at a magnification to which the screen magnification changes, when a user releases the user input. The second time may be longer than the first time and the second magnification may be a magnification which is more zoomed out than the first magnification.

In an embodiment, the controlling to zoom in on the region may include tracking a touch input or a mouse input of a user, storing image data of a region zoomed in and navigated by the user, learning an enlargement pattern and an interest of the user based on the stored image data, and automatically zooming in and displaying a region of interest of the user on the entire screen of the user.

### [ADVANTAGEOUS EFFECTS OF THE INVENTION]

The present disclosure may have an effect capable of simultaneously receiving screen enlargement and a real-time relay service by means of only a simple operation using a portable electronic device.

Furthermore, the present disclosure may have an effect capable of simply providing a screen enlargement real-time relay service for blind people with low vision.

### [DESCRIPTION OF THE DRAWINGS]

FIGS. 1A and 1B are flow diagrams illustrating a method for enlarging and navigating a screen according to an embodiment of the present disclosure;
FIG. 2 is a drawing illustrating a configuration of a user's electronic device which drives a screen enlargement real-time relay system according to an embodiment of the present disclosure;
FIGS. 3A and 3B are flowcharts illustrating an operation method of a screen enlargement real-time relay system according to an embodiment of the present disclosure;
FIG. 4 is a flowchart illustrating a method for enlarging and navigating a screen according to an embodiment of the present disclosure;
FIG. 5 is a flowchart illustrating a method for tracking a pointer of a screen sharer according to an embodiment of the present disclosure;
FIG. 6 is an example of a drawing illustrating a method for enlarging and navigating a screen according to an embodiment of the present disclosure;
FIG. 7 is another example of a drawing illustrating a method for enlarging and navigating a screen according to an embodiment of the present disclosure;
FIG. 8 is a drawing illustrating a process of accessing a screen enlargement real-time relay service according to an embodiment of the present disclosure;
FIG. 9 is a drawing illustrating a process of accessing a screen enlargement real-time relay service according to an embodiment of the present disclosure;
FIG. 10 is another example of a drawing illustrating a method for enlarging and navigating a screen according to an embodiment of the present disclosure; and
FIGS. 11A and 11B are other examples of drawings illustrating a method for enlarging and navigating a screen according to an embodiment of the present disclosure.

### [BEST MODE]

Hereinafter, the present disclosure will be described with reference to the accompanying drawings. The present disclosure may include several embodiments through various modifications, wherein specific embodiments are exemplified in the accompanying drawings and will be explained in detail. However, it should be understood that this is not intended to limit the present disclosure to specific implementation forms and includes all modifications, equivalents, and/or alternatives included in the spirit and the technical scope of the present disclosure. With regard to description of drawings, similar denotations may be used for similar components.

In the present disclosure, the expressions "include" and "comprise", or "may include" and "may comprise" used herein indicate existence of corresponding functions, operations, or components but do not exclude presence of one or more additional functions, operations, or components. It should be understood that in the present disclosure, terms such as "include" or "have" specify existence of a characteristic, a figure, a step, an operation, a component, a part or a combination thereof which are described in the specification but do not previously exclude existence or possibility of addition of one or more different characteristics, figures, steps, operations, components, parts or combinations thereof.

The term 'and/or' includes any and all combinations of the associated listed words. For example, the term "A or B" may refer to including A, including B, or including all of A and B.

The expressions, such as "1st", "2nd", "first", "second", and the like used in the present disclosure may be used to refer to various components of the present disclosure, but do not limit the components. For example, the expressions do not limit the order, the priority, and/or the like of the components. The expressions may be used to distinguish one component from another component. For instance, both "a first user device" and "a second user device" are user devices and indicate different user devices from each other. For example, without departing from the scope of the present disclosure, a first component may be referred to as a second component, and similarly, a second component may be referred to as a first component.

It will be understood that when a component is referred to as being "coupled with/to" or "connected to" another component, it may be directly coupled with/to or connected to the other component or an intervening component may be present. In contrast, when a component is referred to as being "directly coupled with/to" or "directly connected to" another component, it should be understood that there are no intervening component.

Terms used in the present disclosure are used to describe specified embodiments and are not intended to limit the scope of the present disclosure. The terms of a singular form may include plural forms unless otherwise specified in context.

Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present disclosure.

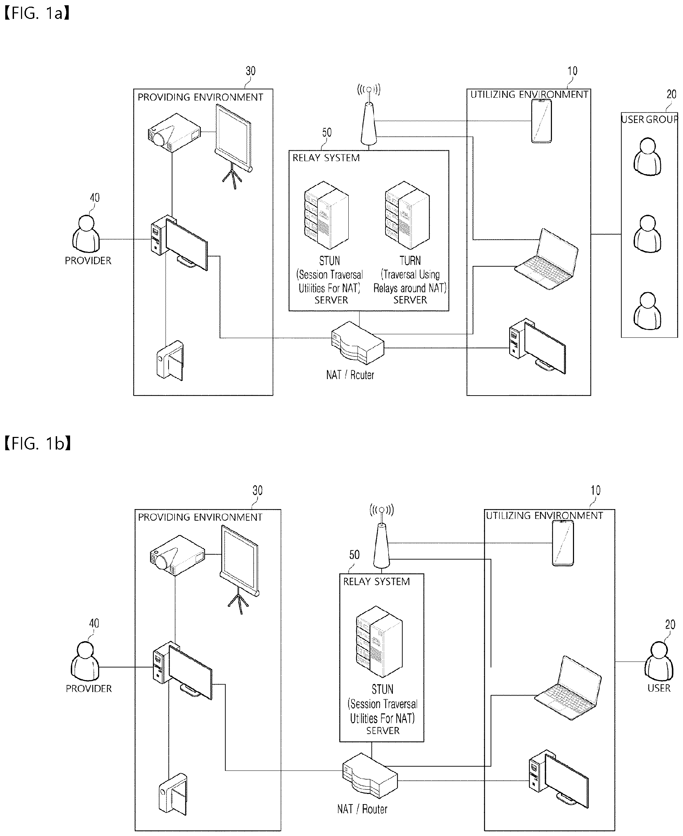

FIGS. 1A and 1B are a drawing illustrating a screen enlargement real-time relay system according to an embodiment of the present disclosure.

According to FIGS. 1A and 1B, the screen enlargement real-time relay system according to an embodiment of the present disclosure may be composed of a user's electronic device 10, a user 20, a provider screen 30, a provider 40, and a relay server 50.

The user's electronic device 10 may be a smartphone, a table PC, a wearable device (glasses or the like), a computer, or the like, which may receive the provider screen 30 from the relay server 50.

The user's electronic device 10 may provide the user 20 with the provider screen 30 provided by the provider 40 and may simultaneously provide a zoom-in function based on an interest of the user 20 in the provided screen.

The screen enlargement real-time relay system may provide a real-time screen sharing service by means of an application installed and run in the user's electronic device 10.

For example, a screen displayed on a provider PC, for example, a university lecture screen or a conference screen, may be shared in a real time on a user smartphone, a tablet PC, a wearable device (glasses or the like), or a computer of a real-time screen sharing service user.

The user 20 is a person who uses the screen enlargement real-time relay system and is a content consumer who receives the provider screen 30 from the relay server 50. There is no limit in age or gender of the user 20.

Referring to FIG. 1A, the screen enlargement real-time relay system according to an embodiment of the present disclosure may relay between a providing system of the provider 40 and a utilization system of the user 20 using a relay system including a session traversal utilities for NAT (STUN) server and a traversal using relays around NAT (TURN) server and an NAT/router.

A description will be given of a provider service sharing method according to an embodiment of the present disclosure.
- Convert a personal identification number (PIN) code into a quick response (QR) code such that the user scans it
- Convert a personal identification number (PIN) code into a uniform resource locator (URL) such that the user access it
- Server issues no-overlapping any four-digit numeric codes to the provider to have ownership within 5 minutes such that the provider notifies the user of it.
- Server issues no-overlapping any four-digit numeric codes to the provider to have ownership within 5 minutes such that the provider notifies the user of it. In addition, replace a four-digit issue code with a pictogram to provide it together

A description will be given of a method for recognizing a provider service according to an embodiment of the present disclosure.
- Provider redefines a name of the service to provide it Ex) PC of xxx -> Engineering Building No. 1, Room 101
- User adds the service of the provider to 'Favorites' to redefine the name Ex) Engineering Building No. 1, Room 101 -> linear algebra

Referring to FIG. 1B, the screen enlargement real-time relay system according to another embodiment of the present disclosure may relay between a providing system of the provider 40 and a utilization system of the user 20 using a relay system including a session traversal utilities for NAT (STUN) server and an NAT/router.

The relationship between the user's electronic device 10, the user 20, the provider screen 30, the provider 40, and the relay server 50 in the screen enlargement real-time relay system according to an embodiment of the present disclosure was briefly described above. Hereinafter, a description will be given in detail of an operation method of the user's electronic device 10 capable of using the screen enlargement real-time relay system.

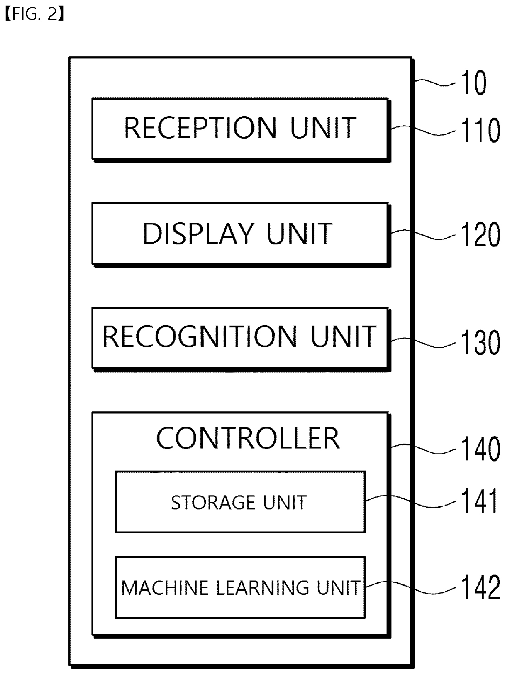

FIG. 2 is a drawing illustrating a configuration of a user's electronic device 10 which drives a screen enlargement real-time relay system according to an embodiment of the present disclosure.

As shown in FIG. 2, the user's electronic device 10 according to an embodiment of the present disclosure may include a reception unit 110, a display unit 120, a recognition unit 130, and a controller 140.

The reception unit 110 may receive the entire screen of a provider screen 30 provided by a provider 40 from a relay server 50 to the user's electronic device 10.

The display unit 120 may display the entire screen of the provider screen 30 received in the reception unit 110 on the user's electronic device 10 to provide the user 20 with the entire screen of the provider screen 30.

When the display unit 120 displays the provider screen 30 on the user's electronic device 10, the controller 140 may track an input of the provider 40 to the provider screen 30 and may zoom in and display a region recognized on the provider screen 30 at a specific magnification to a user 20.

For example, when the provider 40 (e.g., a lecturer) provides the provider screen 30 with a pointer input by means of a provider input (a touch input, a mouse input, a laser pointer input, or the like), a screen adjacent to the pointer input may be enlarged and provided at a specific magnification to the user 20 without shaking. A description will be given in detail below of the controller 140.

The recognition unit 130 may detect a user input (a touch input, a mouse input, or the like) of the user 20 on one screen displayed on the user's electronic device 10 by the display unit 120. For example, whether there is contact or non-contact in the touch input and an operation in a contacted state in the touch input may be recognized. Furthermore, whether there is a click input of a mouse or a drag operation in the clicked state may be recognized.

When the display unit 120 receives the provider screen 30 from the relay server 50 and displays the provider screen 30 on the user's electronic device 10, the controller 140 may track a provider input of the provider 40 to the provider screen 30 and may control to zoom in on a region recognized on the provider screen 30 at a specific magnification to the user 20. Furthermore, the user input (the touch input, the mouse input, or the like) detected by the recognition unit 130 may be tracked.

For example, when the recognition unit 130 detects the user input during a first time, a region corresponding to the user input may be zoomed in at a first magnification corresponding to the first time. When the recognition unit 130 detects the user input during a second time, the region corresponding to the user input may be zoomed in at a second magnification corresponding to the second time. When the recognition unit 130 detects the user input below a predetermined time, it may return to an initial screen.

In detail, when the recognition unit 130 detects the user input for six seconds, the region corresponding to the user input may be zoomed in at two times magnification corresponding to the six seconds. When the recognition unit 130 detects the user input for two seconds, the region corresponding to the user input may be zoomed in at ten times magnification corresponding to the two seconds. Furthermore, when the recognition unit 130 detects the user input below one second which is a predetermined time, it may return to the initial screen. Herein, it is merely illustrative, and it is understood that the technical scope of the present disclosure is not limited thereto.

The controller 140 may include a storage unit 141 and a machine learning unit 142.

The storage unit 141 may store image data of a region zoomed in and navigated by the user 20.

The machine learning unit 142 may learn an enlargement pattern and an interest of the user 20 based on the stored image data and may control to automatically zoom in and display a region of interest of the user 20 on the entire screen of the user's electronic device 10 or the entire screen of the provider screen 30 received from the provider 40.

For example, when the user 20 runs an application installed and run in the screen enlargement real-time relay system by means of the user's electronic device 10, the controller 140 may track a user input (a touch input, a mouse input, or the like) of the user 20 and may store a region zoomed in and navigated by the user 20 as image data. The enlargement pattern and the interest of the user may be learned based on the stored image data and a region of interest of the user 20 may be automatically zoomed in and displayed on the entire screen of the user's electronic device 10.

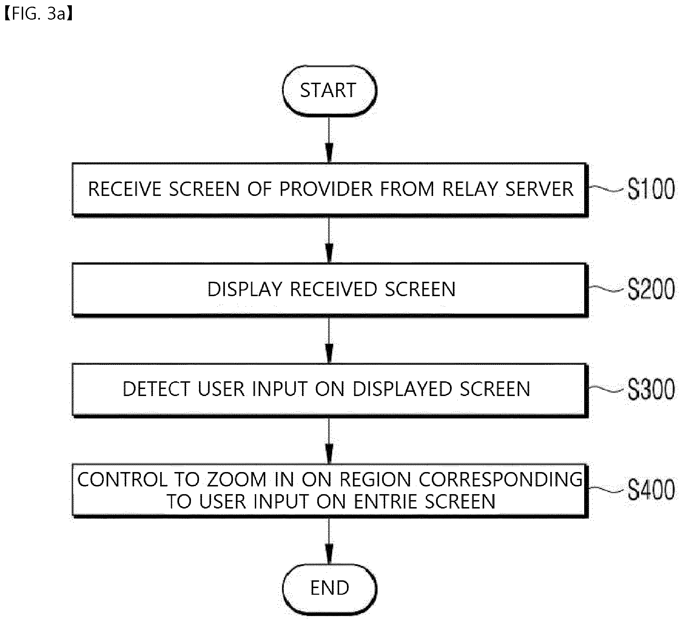

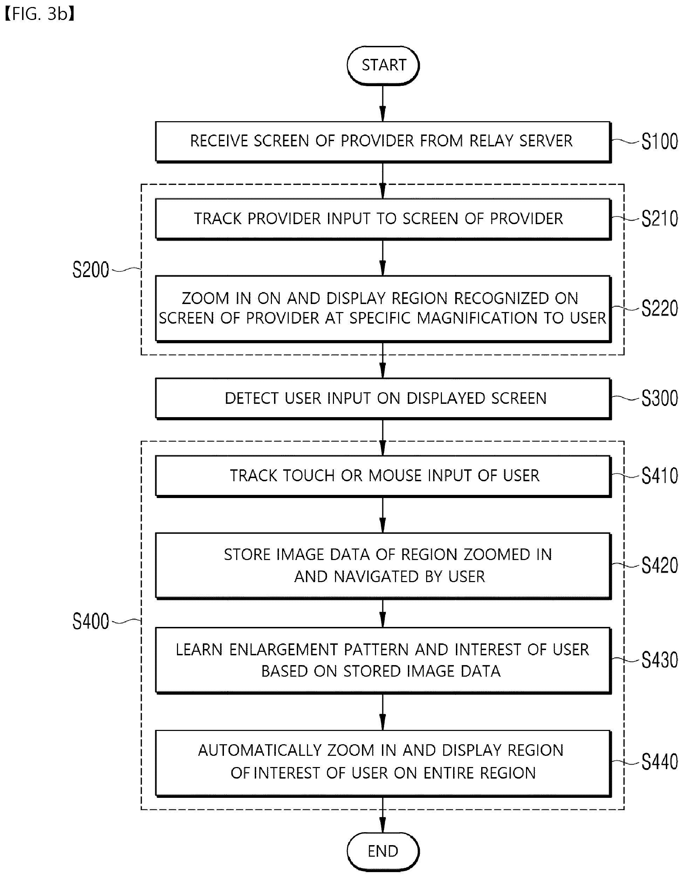

FIGS. 3A and 3B are a flowchart illustrating an operation method of a screen enlargement real-time relay system according to an embodiment of the present disclosure.

According to FIG. 3A, first of all, the screen enlargement real-time relay system according to an embodiment of the present disclosure may receive a provider screen 30 from a relay server 50 (S100).

The provider screen 30 may be the entire screen of the provider screen 30 (a PC, a beam projector, a smartphone, a tablet PC, or the like) provided by a provider 40.

After receiving the provider screen 30, the screen enlargement real-time relay system may display the received screen on a user's electronic device 10 (S200).

The screen enlargement real-time relay system may detect a user input of a user 20 on the displayed screen (S300).

The screen enlargement real-time relay system may control to zoom in on a region corresponding to the user input on the displayed entire screen (S400).

According to FIGS. 2 and 3B, a controller 140 may including tracking (S210) a provider input to the provider screen 30 in S200 and zooming in and displaying (S220) a region recognized on the provider screen 30 at a specific magnification to the user 20.

Furthermore, the controller 140 may track a touch input or a mouse input of the user 20 in S400 (S410).

A storage unit 141 of the controller 140 may store image data of a region zoomed in and navigated by the user 20 (S420).

A machine learning unit 142 of the controller 140 may learn an enlargement pattern and an interest of the user 20 based on the stored image data (S430) and may automatically zoom in and display a region of interest of the user 20 on the entire screen (S440).

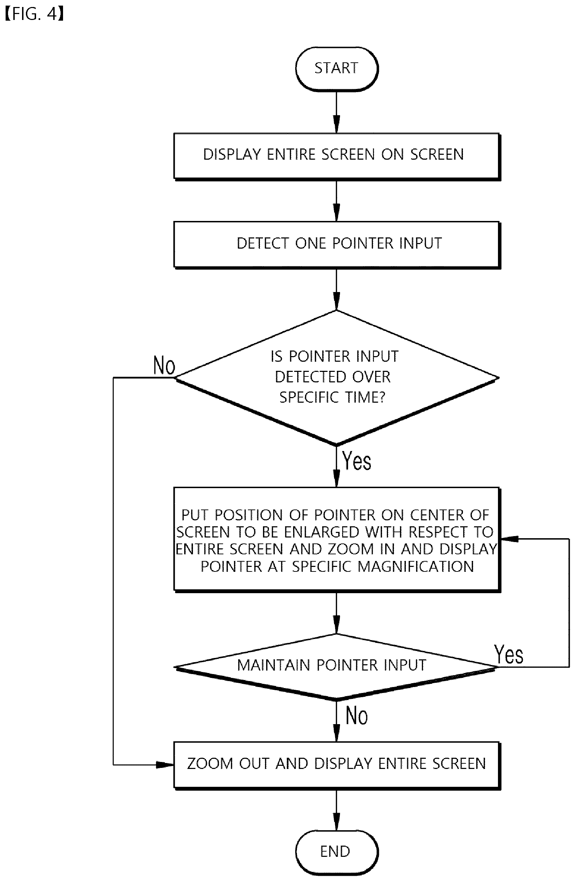

FIG. 4 is a flowchart illustrating a method for enlarging and navigating a screen according to an embodiment of the present disclosure.

For people with low vision who cannot see clearly, just viewing a high-resolution screen has a great effect on vision assistance. This means the people with low vision do not always zoom in and see things.

The present disclosure roughly starts from two ideals. First, there is an enlargement method for simply switching from zoom in to zoom out. Secondly, there is a method for quickly tracking and seeing an interest.

When seeing a real-time screen of a camera or Flowy Cast, a static screen of the captured image, or the like, it is easy to only touch a specific portion when needed when seeing the entire screen to quickly zoom in and see his or her interest and see the entire screen again when releasing the touch.

Because it is able to move the zoomed-in position while the zoom-in magnification is maintained when holding the touch and moving the pointer, it is more convenient to track and see a moved interest. This has two differences with the existing enlargement method. First, it is able to perform enlargement and navigation at the same time. Secondly, it is easy to track an interest by moving a pointer rather than moving the device for navigation.

The present disclosure above may store image data of a region (which is an interest), which is directly zoomed in and navigated by a user 20, to learn a user's interest and may implement an image learning based enlargement function of proposing an interest although the user 20 does not directly input a pointer and automatically zooming in on the interest.

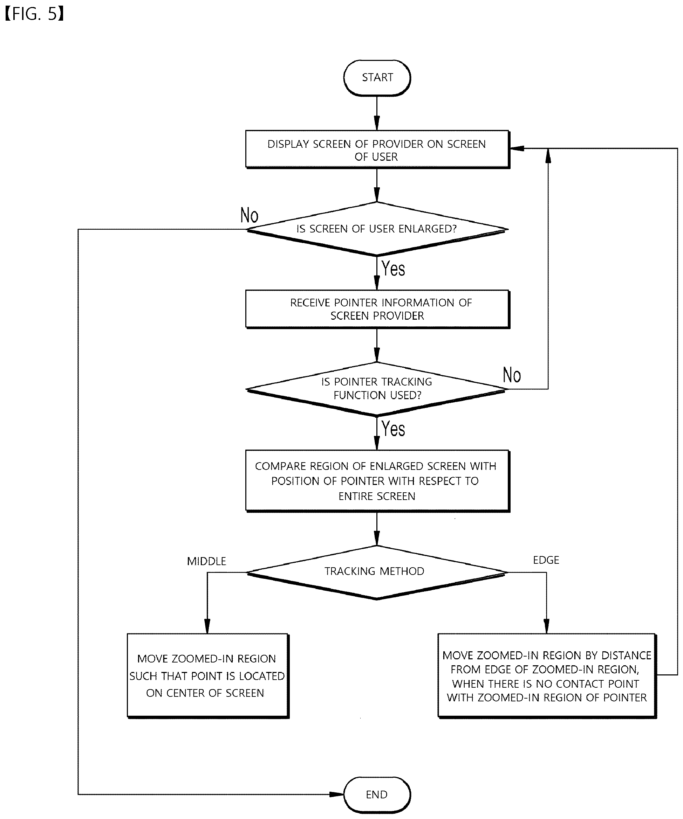

FIG. 5 is a flowchart illustrating a method for tracking a pointer of a provider screen 30 according to an embodiment of the present disclosure.

Although a user 20 receives a screen of a counterpart using the Flowy Cast, it is not easy for the user 20 to recognize and follow an interest of a provider. Particularly, when the user 20 zooms in on his or her interest and stays on his or her interest, it is more difficult to move to the interest of the provider.

The present disclosure provides a pointer tracking method for transmitting a mouse pointer or a touch input event of the provider to the user 20 and moving a zoomed-in region to a transmitted pointer position, when a user's screen is enlarged in advance.

When the user 20 does not want the pointer tracking function, the pointer tracking function is not executed. A movement method of the zoomed-in region may vary with a 'middle or edge' option in the tracking method.

According to an embodiment, a function which does not shake in a screen used by a person with low vision when moving a mouse cursor may be provided, other than an enlargement and jumping function not to lose a focus on the invention point of Flowy.

Flowy should synchronize a screen of a lecturer with a screen of a user in a lecture hall which is one of used examples to currently use a quick response (QR) code or a 12-digit long numeric code.

Even though trying to make it available in very large auditorium classrooms or event venues such as conventions, it is inconvenient to perform synchronization. (It is unable to take a quick response (QR) code in a remote place or it is difficult to deliver a long numeric code).

For example, the device hears frequencies beyond the auditory range to perform synchronization or hears a specific speech or voice to perform synchronization.

The present disclosure relates to a screen enlargement real-time relay service for blind people with low vision. In detail, the present disclosure provides a service of relaying a projection or a big screen of a university, an academy lecture, an event hall, or a conference hall to a user's electronic device 10 (e.g., a smartphone or a tablet PC) in real time. there is an inconvenience of having to move the smartphone itself after enlarging the screen when using a conventional general zoom function, whereas the Flowy zoom proposed in the present disclosure has an advantage where it is able to use a screen enlargement real-time relay service by only using a touch input or a scroll input of the user without moving the smartphone.

A first feature of the present disclosure is "when a touch input above a specific time is detected on a touch screen in an electronic device, a (Flowy zoom default function) of enlarging and displaying a screen adjacent to the corresponding touch input at a specific magnification".

A second feature of the present disclosure is "(a pointer tracking function) of enlarging and providing a screen adjacent to a point input of a screen provider (e.g., a lecturer) to the user 20 without shaking using the pointer tracking function for the screen provider".

A third feature of the present disclosure is "(a screen enlargement magnification adjustment function) of setting a screen enlargement magnification (e.g., sequentially changing the screen enlargement magnification from ten times to two times and displaying the screen at the corresponding screen magnification when the user 20 releases the touch input) to correspond to a touch input time of the user".

A fourth feature of the present disclosure is "(a user interest data learning function) of storing image data of a region (which is an interest), which is directly zoomed in and navigated by the user 20, to learn the user's interest and proposing and automatically zooming in on an interest although the user 20 does not directly input a pointer".

A fifth feature of the present disclosure is "a user identification method (user identification by interworking with a WIFI password) capable of being exploited in very large auditorium classrooms or event venues such as conventions".

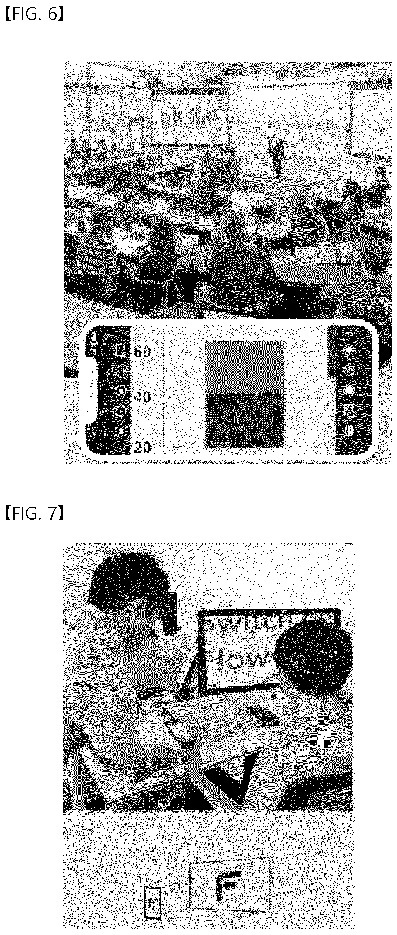

FIG. 6 is an example of a drawing illustrating a method for enlarging and navigating a screen according to an embodiment of the present disclosure.

Referring to FIG. 6, the method for enlarging and navigating the screen according to an embodiment of the present disclosure may provide a real-time screen sharing service by means of an application run in a user smartphone, a tablet PC, a wearable device (glasses or the like), or the like.

For example, a screen displayed on a provider PC, for example, a university lecture screen or a conference screen, may be shared in a real time on a user smartphone, a tablet PC, or a wearable device (glasses or the like) of a real-time screen sharing service user.

FIG. 7 is another example of a drawing illustrating a method for enlarging and navigating a screen according to an embodiment of the present disclosure.

Referring to FIG. 7, the method for enlarging and navigating the screen according to an embodiment of the present disclosure may provide a real-time screen sharing service by means of an application run in a user smartphone, a tablet PC, a wearable device (glasses or the like), or the like.

For example, a user may forward a screen provided on the user smartphone, the tablet PC, the wearable device (glasses or the like), or the like to a PC to receive a function such as a reading magnifier.

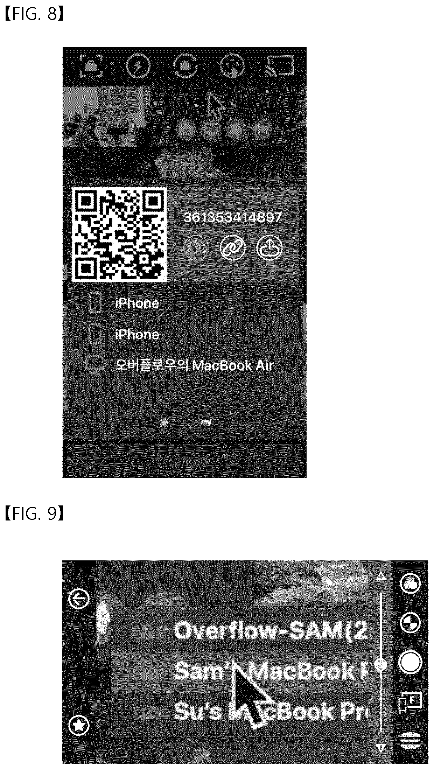

FIG. 8 is a drawing illustrating a process of accessing a screen enlargement real-time relay service according to an embodiment of the present disclosure.

Referring to FIG. 8, a user may access the screen enlargement real-time relay service using a quick response (QR) code or a password (e.g., 361353414897) provided to a user smartphone, a tablet PC, a wearable device (glasses or the like), or the like.

FIG. 9 is a drawing illustrating a process of accessing a screen enlargement real-time relay service according to an embodiment of the present disclosure.

Referring to FIG. 9, a user may adjust a screen enlargement magnification to identify the screen enlargement real-time relay service.

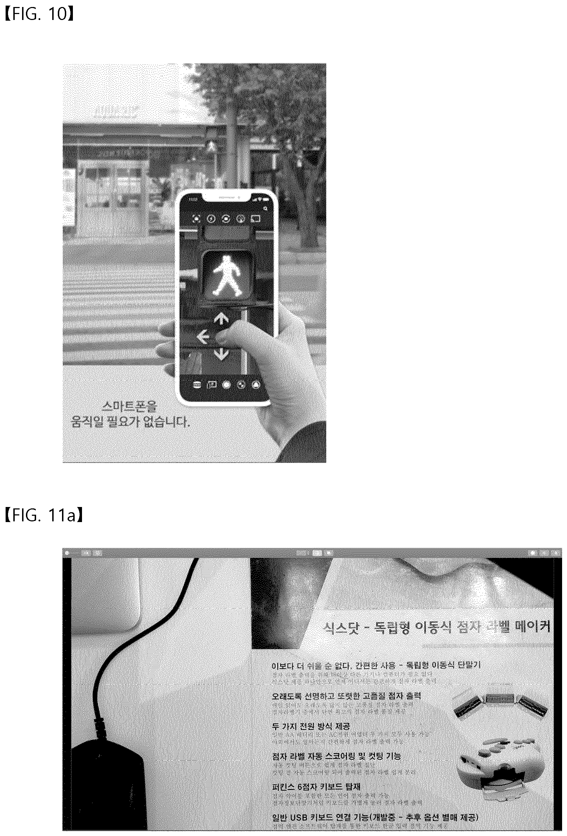

FIG. 10 is another example of a drawing illustrating a method for enlarging and navigating a screen according to an embodiment of the present disclosure.

Referring to FIG. 10, the method for enlarging and navigating the screen according to an embodiment of the present disclosure may put the entire image on a phone screen and may simply scroll the screen using a finger touch input to enlarge and navigate the screen, by means of an application run in a user smartphone, a tablet PC, a wearable device (glasses or the like), or the like.

For example, a user 20 may zoom in and display a traffic light portion far apart from the user 20 on the screen using a touch input to the screen of the smartphone, the tablet PC, the wearable device (glasses or the like), or the like, when the user 20 crosses a crosswalk.

In detail, when the user 20 with poor eyesight crosses a crosswalk, a user's electronic device 10 on which a screen enlargement real-time relay system application is run may automatically zoom in on a position of traffic lights based on data learned by means of a machine learning unit 142 and may provide the user 20 with the enlarged traffic lights. Herein, it is merely illustrative, and it is understood that the technical scope of the present disclosure is not limited thereto.

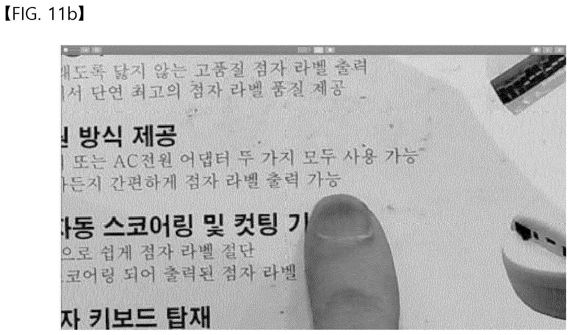

FIGS. 11A and 11B are another example of a drawing illustrating a method for enlarging and navigating a screen according to an embodiment of the present disclosure.

Referring to FIGS. 11A and 11B, the method for enlarging and navigating the screen according to an embodiment of the present disclosure may learn a screen enlargement pattern of a user 20 using machine learning and may track a user's finger touch to enlarge and display the screen.

FIG. 11A is the entire screen in a default state before the screen is enlarged.

FIG. 11B is a drawing illustrating an enlarged screen after the user 20 touches the screen.

Embodiments disclosed in the specification and drawings are only propose a specific example to easily describe contents of the present disclosure and help understanding and are not intended to limit the scope of the present disclosure. Therefore, it should be interpreted that all changed or modified forms derived based on the technical scope of the present disclosure are included in the scope of the present disclosure, other than embodiments disclosed herein.

## Claims

1. An electronic device, comprising:
a reception unit configured to receive the entire screen of a provider from a relay server;
a display unit configured to display the received entire screen;
a recognition unit configured to detect a user input on the displayed entire screen; and
a controller configured to detect a change in input state of the user input and zoom in on a region corresponding to the user input, on the entire screen based on the change in input state,
wherein the controller zooms in on the region corresponding to the user input at a first magnification corresponding to a first time, when the recognition unit detects the user input during the first time, zooms in on the region corresponding to the user input at a second magnification corresponding to a second time, when the recognition unit detects the user input during the second time, and returns to an initial screen, when the recognition unit detects the user input below a predetermined time.

2. The electronic device of claim 1, wherein the controller zooms in and provides a recognition region corresponding to a provider input at a predetermined magnification to a user, based on the provider input which is input to the entire screen of the provider.

3. The electronic device of claim 2, wherein the provider input is at least one of a touch input, a mouse input, and a laser pointer input of the provider, and
wherein the user input is an input including at least one of a touch input and a mouse input of the user.

4. The electronic device of claim 1, wherein the controller is configured to sequentially change a screen enlargement magnification to correspond to an input time of the user input and display the region corresponding to the user input at a magnification to which the screen magnification changes, when a user releases the user input, and
wherein the second time is longer than the first time and the second magnification is a magnification which is more zoomed out than the first magnification.

5. The electronic device of claim 4, wherein the controller includes:
a storage unit configured to store image data of a region zoomed in and navigated by the user; and
a machine learning unit configured to learn an interest of the user, the interest being stored in the storage unit, and
wherein the machine learning unit learns a screen enlargement pattern of the user, tracks a touch input or a mouse input of the user, and automatically zooms in and displays a region of interest of the user on the entire screen of the user.

6. The electronic device of claim 1, wherein the electronic device is any one of a smartphone, a tablet PC, a wearable device, and a computer.

7. The electronic device of claim 1, wherein a method for accessing an application program implemented in the electronic device is at least one of sharing a personal identification number (PIN) code, a quick response (QR) code, a uniform resource locator (URL), any numeric code, and a WIFI password.

8. A system including a relay server and an electronic device, the system comprising:
the relay server configured to include at least one of a session traversal utilities for NAT (STUN) server and a traversal using relays around NAT (TURN) server; and
the electronic device configured to include:
a reception unit configured to receive the entire screen of a provider from the relay server;
a display unit configured to display the received entire screen;
a recognition unit configured to detect a user input on the displayed entire screen; and
a controller configured to detect a change in input state of the user input and zoom in on a region corresponding to the user input, on the entire screen based on the change in input state,
wherein the controller zooms in on the region corresponding to the user input at a first magnification corresponding to a first time, when the recognition unit detects the user input during the first time, zooms in on the region corresponding to the user input at a second magnification corresponding to a second time, when the recognition unit detects the user input during the second time, and returns to an initial screen, when the recognition unit detects the user input below a predetermined time.

9. An operation method of an apparatus for enlarging and displaying a screen and relaying the enlarged screen in real time, the operation method comprising:
receiving the entire screen of a provider from a relay server;
displaying the received entire screen;
detecting a user input on the displayed entire screen;
detecting a change in input state based on the user input; and
controlling to zoom in on a region corresponding to the user input, on the entire screen based on the change in input state,
wherein the controlling to zoom in on the region includes:
zooming in on the region corresponding to the user input at a first magnification corresponding to a first time, when detecting the user input during the first time, in the detecting of the user input;
zooming in on the region corresponding to the user input at a second magnification corresponding to a second time, when detecting the user input during the second time, in the detecting of the user input; and
returning to an initial screen, when detecting the user input below a predetermined time, in the detecting of the user input.

10. The operation method of claim 9, wherein the displaying includes:
tracking a provider input to the screen of the provider; and
zooming in and displaying a region recognized on the screen of the provider at a specific magnification to a user.

11. The operation method of claim 9, wherein the controlling to zoom in on the region includes:
sequentially changing a screen enlargement magnification to correspond to an input time of the user input and displaying the region corresponding to the user input at a magnification to which the screen magnification changes, when a user releases the user input, and
wherein the second time is longer than the first time and the second magnification is a magnification which is more zoomed out than the first magnification.

12. The operation method of claim 9, wherein the controlling to zoom in on the region includes:
tracking a touch input or a mouse input of a user;
storing image data of a region zoomed in and navigated by the user;
learning an enlargement pattern and an interest of the user based on the stored image data; and
automatically zooming in and displaying a region of interest of the user on the entire screen of the user.
